# EUROPÄISCHE PATENTSCHRIFT

(11) **EP 3 430 292 B1**
(45) Veröffentlichungstag und Bekanntmachung des Hinweises auf die Patenterteilung: **19.02.2020**
(21) Anmeldenummer: 17711146.5
(22) Anmeldetag: 15.03.2017
(51) Int. Cl.: F16J 15/02, F16J 15/06, F16J 15/10

(54) **DICHTUNGSANORDNUNG ZUR ABDICHTUNG EINES SPALTES**
SEAL ARRANGEMENT FOR SEALING A GAP
ENSEMBLE D'ÉTANCHÉITÉ POUR L'ÉTANCHÉIFICATION D'UNE FENTE

(30) Priorität: 18.03.2016 DE 102016105047
(43) Veröffentlichungstag der Anmeldung: 23.01.2019
(73) Patentinhaber: GEA Mechanical Equipment GmbH, 59302 Oelde (DE)
(72) Erfinder: MACKEL, Wilfried, 59510 Lippetal-Herzfeld (DE); KLEIMANN, Thomas, 59302 Oelde (DE)
(74) Vertreter: Specht, Peter
(86) Internationale Anmeldenummer: PCT/EP2017/056171
(87) Internationale Veröffentlichungsnummer: WO 2017/158057

(56) Entgegenhaltungen:
- DE-A1- 3 815 511
- DE-A1-102011 081 973
- JP-A- 2013 044 379

## Beschreibung

Die Erfindung betrifft eine Dichtungsanordnung zur Abdichtung eines Spaltes nach dem Oberbegriff des Anspruchs 1.

Aus dem Stand der Technik - siehe beispielsweise die DE 10 2011 081 973 A1 - ist es bekannt, Spalte zwischen zwei aneinandergrenzenden Bauteilen mit einer L-förmigen Dichtung abzudichten, die mit einem Fußbereich in eine L-förmige Nut in dem ersten der beiden Bauteile, die den Spalt begrenzen, eingreift, wobei sich eine Dichtfläche über die Nut vorstehend erstreckt, die an dem anderen, zweiten Bauteil an der gegenüberliegenden Seite des Spaltes anliegt. Diese Dichtung ist relativ kompliziert aufgebaut und erfordert eine baulich kompliziert zu fertigende Nut mit einem speziellen sich in die Nut erstreckenden Vorsprung, was auch die Gefahr mit sich bringt, dass sich in der Nut leicht Verschmutzungen bilden.

Bei der Abdichtung des Randbereiches eines Spaltes zwischen zwei Bauteilen ist insofern in der Verfahrenstechnik nicht nur die Dichtfunktion von Bedeutung sondern auch eine Auslegung und Ausgestaltung derart, dass sich am Spalt und an der Dichtung einerseits wenig Ablagerungen bilden und dass andererseits eine gute Möglichkeit zur Reinigung am Spalt offenliegender Bereiche der Dichtung besteht.

Im Rahmen der vorliegenden Erfindung sollen eine Dichtungsanordnung und eine Dichtung geschaffen werden, welche diesen Anforderungen jeweils gut gerecht werden, d.h. die Dichtung soll einerseits ihre Dichtfunktion gut erfüllen und andererseits derart ausgelegt sein, dass sich möglichst wenig Schmutzecken oder Spalte ausbilden in denen sich Ablagerungen bilden. Dies ist bei verfahrenstechnischen Anlagen eine häufige gestellte Forderung zur Verbesserung der Reinigbarkeit, Sterilisation oder Desinfizierung aller produktberührenden Komponenten.

Die Erfindung löst diese Aufgabe durch den Gegenstand des Anspruchs 1. Geschaffen wird eine Dichtungsanordnung für eine verfahrenstechnische Vorrichtung oder Anlage, mit einer Bauteilanordnung mit zwei abschnittsweise im Bereich eines Spaltes aneinandergrenzenden Bauteilen, wobei an dem einen der beiden Bauteile zum Spalt hin eine Nut ausgebildet ist, die L-förmig ausgebildet ist und zu einem Rand des Spaltes hin offen steht, wobei sich ein erster Nutschenkel der Nut senkrecht zur Ebene des Spaltes erstreckt und wobei ein weiterer Nutschenkel senkrecht zum ersten Nutschenkel ausgerichtet ist, der zum Raum hin offen ausgebildet ist, wobei eine Dichtung in die Nut eingesetzt ist, die ebenfalls eine L-Form aufweist, welche der L-Form der Nut entspricht, wozu sie einen ersten Dichtschenkel aufweist und einen dazu senkrechten zweiten Dichtschenkel, wobei der erste Dichtschenkel derart ausgelegt ist, dass er in den ersten Nutschenkel eingesetzt ist, und der zweite Dichtschenkel derart ausgelegt ist, dass er in den zweiten Nutschenkel einsetzbar ist und dort festgeklemmt ist, wobei die Dichtung im nicht eingesetzten Zustand relativ zu den Abmessungen der Nut ein Übermaß aufweist und derart in die Nut eingesetzt und in dieser festgeklemmt ist. Nach dem Kennzeichen ist ferner vorgesehen, dass der erste Dichtschenkel in einem Zustand, in dem er nicht in den ersten Längsschenkel der Nut eingesetzt ist, im Bereich eines Dichtfußes ein Übermaß zur Nut aufweist, insbesondere ein Übermaß senkrecht zu dem ersten Längsschenkel der Nut aufweist, wobei zumindest an drei Außenflächen des ersten Dichtschenkels zu den Wandungen der Nut hin im eingesetzten und komprimierten Zustand der Dichtung in die Nut jeweils eine sich senkrecht zum Dichtungsquerschnitt an der jeweiligen Wandung der Nut entlang erstreckende Rinne ausgebildet ist und dass diese eine oder mehrere Rinnen derart bemessen sind, dass auch in dem Zustand, in welchem der Dichtfuß in den Nutschenkel eingesetzt ist, im Bereich der Rinne jeweils noch ein Abstand zwischen der Dichtung und der jeweils zugeordneten Innenwand der Nut besteht, wobei zumindest zwei dieser Rinnen im Bereich des ersten Längsschenkels ausgebildet sind und etwa mittig im Bereich der jeweiligen Nutwandung dieses Längsschenkels verlaufen, und wobei oberhalb des Dichtfußes ein Dichtbereich ausgebildet ist, der zum Spaltrand hin eine Randfläche aufweist, wobei die Randfläche derart ausgelegt ist, dass ein im Wesentlichen ebener Übergang zwischen den Randflächen der Bauteile, die sich winklig zur Spaltebene erstrecken, und der Randfläche ausgebildet ist.

Vorzugsweise ist auch in dem Zustand, in welchem der Dichtfuß in den Nutschenkel eingesetzt ist, jeweils im Bereich der Rinne jeweils noch ein Abstand > 0,1 mm zwischen der Dichtung bzw. deren Dichtfuß und der jeweils zugeordneten Innenwand der Nut gegeben.

Die Rinnen - insbesondere auch die beiden mitten an der Nutwand vorgesehenen Rinnen im ersten Längsschenkel - bieten gut Raum für die erforderliche Verformung der Dichtung beim Einsetzen in die Nut. Sie entstehen auch aufgrund des angegeben Übermaßes des Fußes der Dichtung im nicht eingesetzten Zustand in einfacher Weise. Die Dichtung ist so sehr gut in der Nut montierbar und sitzt dennoch im eingesetzten Zustand fest eingespannt in der Nut.

Insgesamt wird mit der erfindungsgemäßen Dichtungsanordnung mit der Dichtung, eingesetzt in den Spalt der zugehörigen Bauteilanordnung mit zwei Bauteilen, erreicht, dass die Dichtung einerseits sicher in der Nut des einen Bauteils am Spalt verankert ist, ohne dass hier zu besondere bauliche Maßnahmen an der Nut erforderlich sind. Der Begriff "Übermaß" bedeutet im Rahmen dieser Schrift, dass die Breite der Dichtung in dem entsprechenden Bereich mit Übermaß im nicht eingesetzten Zustand um das Übermaß größer ist als die entsprechende Breite der Nut bzw. der korrespondierende Abstand gegenüberliegender Nutwandungen der Nut in diesem Bereich. Das Übermaß beträgt wenigstens 1 mm, vorzugsweise mehr als 2 mm.

Zudem fluchtet nach der weiteren Variante (und auch Option) des Kennzeichens eine frei liegende Randfläche der Dichtung, die zum Spaltrand gewandt ist, gut mit den angrenzenden Wandungen der beiden Bauteile. Die Ausbildung von Schmutzecken oder Spalten in diesem Bereich wird vermieden. Sie ist wenig empfindlich für Anbackungen und lässt sich gut reinigen.

Vorzugsweise ist beidseits jeder der Rinnen eine Anlage der zugehörigen Dichtungsaußenfläche an der zugehörigen Innenwandung der Nut gegeben, so dass an jeder der Dichtungsaußenflächen jeweils zwei Anlagebereiche zu dem korrespondierenden Bauteil ausgebildet werden, was den Sitz der Dichtung verbessert und die Dichtwirkung optimiert.

Zudem wird vorzugsweise erreicht, dass sich zum anderen Bauteil hin wenigstens zwei parallel verlaufende Dichtlinien bzw. Dichtabschnitte an der Dichtfläche ausbilden. Zudem sind jeweils in der Nut zu allen Seiten hin einer oder zwei feste, definierte Anlagebereiche zu den Nutwandungen hin ausgebildet.

Geschaffen wird auch eine vorteilhafte Dichtungsanordnung für eine verfahrenstechnische Vorrichtung oder Anlage, mit einer Bauteilanordnung mit zwei abschnittsweise im Bereich eines Spaltes aneinandergrenzenden Bauteilen, wobei an dem einen der beiden Bauteile zum Spalt hin eine Nut ausgebildet ist, die L-förmig ausgebildet ist und zu einem Rand des Spaltes hin offen steht, wobei sich ein erster Nutschenkel der Nut senkrecht zur Ebene des Spaltes erstreckt und wobei ein weiterer Nutschenkel senkrecht zum ersten Nutschenkel ausgerichtet ist, der zum Raum hin offen ausgebildet ist, wobei eine Dichtung in die Nut eingesetzt ist, die ebenfalls eine L-Form aufweist, welche der L-Form der Nut entspricht, wozu sie einen ersten Dichtschenkel aufweist und einen dazu senkrechten zweiten Dichtschenkel, wobei der erste Dichtschenkel derart ausgelegt ist, dass er in den ersten Nutschenkel eingesetzt ist, und der zweite Dichtschenkel derart ausgelegt ist, dass er in den zweiten Nutschenkel einsetzbar ist und dort festgeklemmt ist, und wobei der erste Dichtschenkel nach Art eines Dichtfußes mit Übermaß in dem ersten Nutschenkel festgeklemmt ist, wobei zumindest an einer, an zwei oder an drei Außenflächen des ersten Dichtschenkels zu den Wandungen der Nut hin jeweils eine sich senkrecht zum Dichtungsquerschnitt erstreckende Rinne ausgebildet ist und dass diese eine oder mehrere Rinnen derart bemessen sind, dass auch in dem Zustand, in welchem der Dichtfuß in den Nutschenkel eingesetzt ist, im Bereich der Rinne (jeweils noch ein Abstand zwischen der Dichtung und der jeweils zugeordneten Innenwand der Nut besteht, und/oder wobei oberhalb des Dichtfußes ein Dichtbereich ausgebildet ist, der zum Spaltrand hin eine Randfläche aufweist, wobei die Randfläche derart ausgelegt ist, dass ein im Wesentlichen ebener Übergang zwischen den Randflächen der Bauteile, die sich winklig zur Spaltebene erstrecken, und der Randfläche ausgebildet ist.

Vorteilhafte Ausgestaltungen sind den Unteransprüchen zu entnehmen.

Nachfolgend wird die Erfindung anhand von Ausführungsbeispielen unter Bezug auf die Zeichnung näher beschrieben, wobei auch weitere vorteilhafte, optionale Merkmale der Erfindung erörtert werden. Es zeigen:
- Fig. 1: eine Schnittansicht einer Dichtungsanordnung mit einer Bauteilanordnung und einer Dichtung;
- Fig. 2: einen Schnitt durch eine Bauteilanordnung der Dichtungsanordnung aus Fig. 1;
- Fig. 3: eine Querschnittsansicht der Dichtung aus Fig. 1; und
- Fig. 4: eine Schnittansicht einer Dichtungsanordnung mit einem Bauteil einer Bauteilanordnung und einer Dichtung, wobei die Dichtung in einem unverformten Zustand einzeichnet wurde.

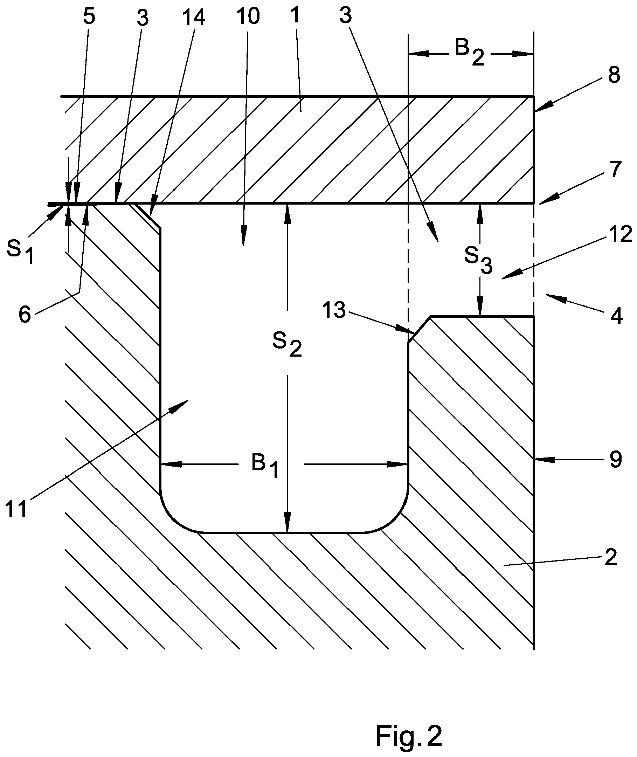

Fig. 2 zeigt einen Schnitt durch einen Abschnitt einer Bauteilanordnung mit zwei aneinandergrenzenden Bauteilen 1, 2, zwischen denen ein Spalt 3 ausgebildet ist.

Diese Bauteilanordnung ist ein Teil einer ansonsten hier nicht dargestellten verfahrenstechnischen Gerätschaft oder Anlage. So können die aneinander grenzenden Bauteile 1, 2 rein beispielhaft zwei Rohrflansche sein oder ein Behälter und ein Deckel oder beispielsweise zwei Elemente, beispielsweise Flansche, an Teilen einer Zentrifuge.

Abzudichten ist der Randbereich des Spaltes 3 zwischen den beiden aneinander liegenden Bauteilen 1, 2. Die beiden Bauteile 1, 2 sind in diesem Randbereich derart ausgestaltet, dass sich der Spalt 3 zu einem breiteren Raum 4 aufweitet. Dieser Raum 4 kann beispielsweise der Innenraum eines Behälters, eines Rohres oder einer Trommel sein.

Die beiden Bauteile 1, 2 grenzen jeweils mit aneinander liegenden Grenzflächen 5 bzw. 6 an den Spalt 3 an. Die Spalttiefe S1 ist hier = 0. Am Rand 7 des Spaltes 3 erstrecken sich weitere Flächen - die nachfolgend Randflächen 8, 9 genannt werden - der Bauteile 1, 2 voneinander weg, hier senkrecht voneinander weg.

Das eine die Bauteile 1, 2 - hier das in der Zeichnung beispielhaft untere Bauteil 2 - weist im Übergangsbereich zwischen der Grenzfläche 6 und der Randfläche 9 eine Nut 10 auf. Die Nut 10 ist hier etwa L-förmig ausgebildet und steht zum Rand 7 bzw. zum Raum 4 hin offen. Ein erster Nutschenkel 11 der Nut 10 erstreckt sich etwa U-förmig senkrecht zur Ebene des Spaltes 3 in das Bauteil 2 hinein. Der erste Nutschenkel 11 weist eine Nutschenkeltiefe S2 senkrecht zum Spalt auf. Ein weiterer zweiter Nutschenkel 12 ist senkrecht zum ersten Nutschenkel 11 ausgerichtet. Er erstreckt sich weniger tief mit einer Nutschenkeltiefe S3 senkrecht zur Grenzfläche 6 in das Bauteil 2 hinein als der erste Nutschenkel 11 und liegt zum Raum 4 hin offen, so dass im Spalt 3 zum Rand bzw. Raum hin die Bauteile 1, 2 nicht direkt aneinander liegen sondern zueinander einen Abstand mit der Nutschenkeltiefe S3 aufweisen.

Dies bedeutet, dass die Spalttiefe S1 bzw. die Nutschenkeltiefen S2 und S3 des Spaltes 3 senkrecht zur Spaltebene 3 wie folgt ausgelegt sind:
S1 < S3 < S2.

Vorzugsweise gilt: S1 = 0 mm und S3 <= ½ S2.

Parallel zum Spalt hat der erste Nutschenkel 11 eine Nutschenkelbreite B1 und der zweite Nutschenkel 12 eine Nutschenkelbreite B2.

Um ein gut stabiles Dichtungsprofil zu erzeugen gilt vorzugsweise: B1 >= B2.

Im Übergangsbereich (Eckbereich) zwischen den beiden Nutschenkeln 11, 12 kann eine Abschrägung (Fase 13) ausgebildet sein. Im Übergangsbereich (Eckbereich) zwischen dem ersten Nutschenkeln 11 und dem Randbereich 6 kann eine weitere Abschrägung (Fase 14) ausgebildet sein. Im Nutgrund des Nutschenkels 11 können die Eckbereiche einen Fertigungsradius aufweisen bzw. abgerundet ausgebildet sein.

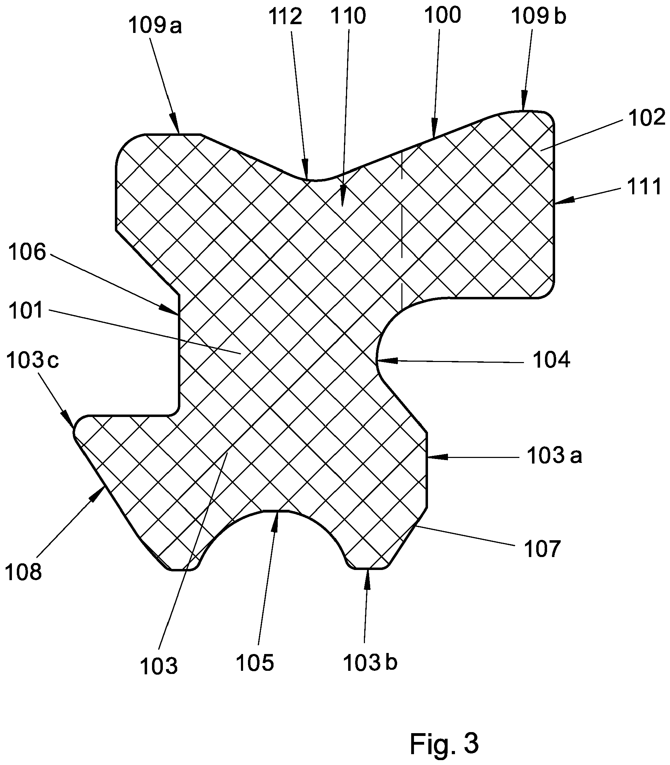

Zur Abdichtung des Spaltes 3 der Bauteilanordnung aus Fig. 2 dient die Dichtung 100 der Fig. 3. Als das Material für die bzw. der Dichtung 100 werden vorzugsweise Elastomere verwendet. Vorzugsweise werden solche Elastomere ausgewählt, welche verfahrenstechnischen, sanitären und hygienischen Anforderungen in den Bereichen Lebensmitteltechnologie, Pharmazie, Chemie oder auch Biotechnologie entsprechen. Die Dichtung soll ferner vorzugsweise nicht plastisch sondern im Wesentlichen elastisch verformbar ausgelegt sein.

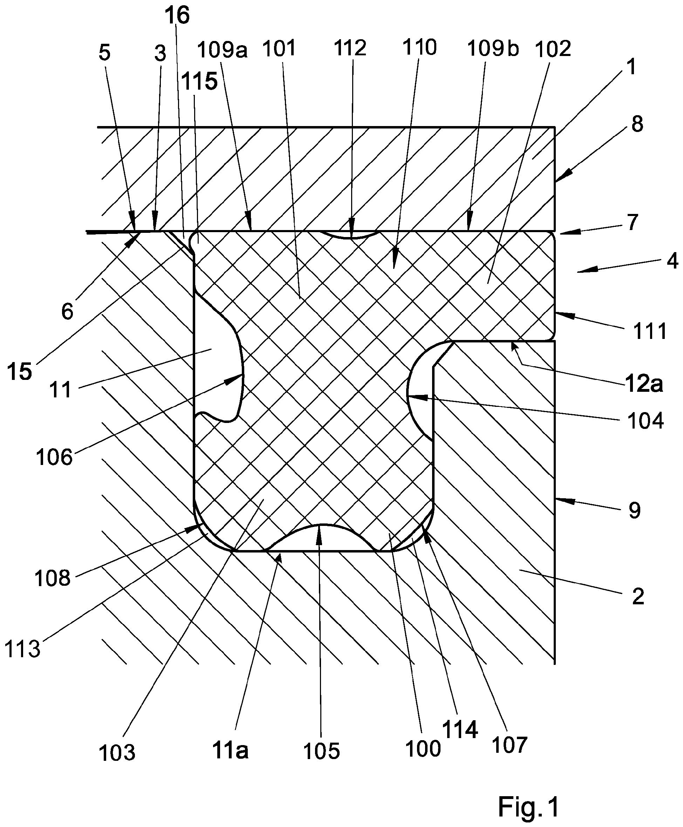

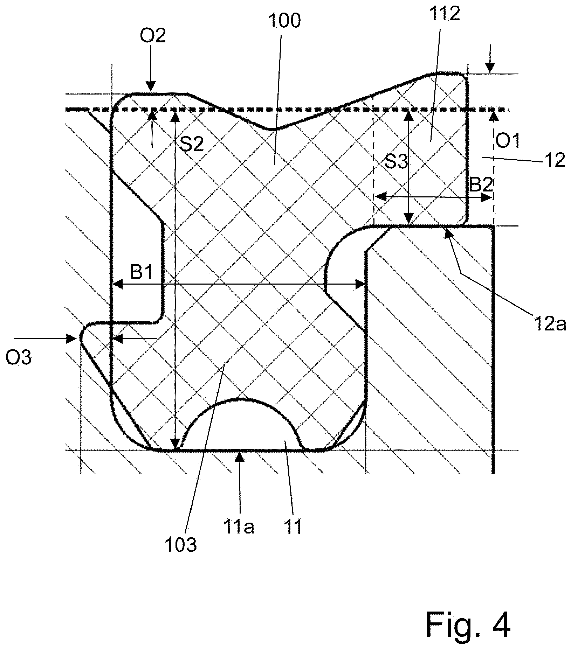

Fig. 4 zeigt eine Schnittansicht einer Dichtungsanordnung mit einem Bauteil 2 einer Bauteilanordnung (und einer gestrichelt angedeuteten theoretischen Grenzfläche 5 zum Bauteil 1 der Fig. 1) und einer Dichtung 100, wobei die Dichtung 100 in einem unverformten Zustand einzeichnet bzw. über den Querschnitt eingeblendet worden ist. Dies entspricht keinem realen Zustand. Die Fig. 4 dient insofern vielmehr zur Veranschaulichung, um im Vergleich mit Fig. 1 verständlich zu machen, in welchen Bereichen die Dichtung 100 bei einem Einsetzen in die Bauteilanordnung komprimiert worden ist, um den Zustand der Fig. 1 zu realisieren.

Die Dichtung 100 weist im Wesentlichen - im unkomprimierten aber auch im komprimierten Zustand - eine L-Form auf, welche der L-Form der Nut 10 im Wesentlichen entspricht. Dies bedeutet, dass die Dichtung 100 einen ersten Dichtschenkel 101 (links der gestrichelten Linie der Fig. 3) aufweist und einen dazu senkrechten Dichtschenkel 102 (rechts der gestrichelten Linie). Wie in Fig. 1 zu erkennen, ist der erste Dichtschenkel 101 derart ausgelegt, dass er mit einem unteren Fußbereich 103 in den ersten Nutschenkel 11 einsetzbar ist, so dass er im eingesetzten Zustand dort festgeklemmt ist. Der zweite Dichtschenkel 102 ist ferner derart ausgelegt, dass er in den ersten Nutschenkel 12 einsetzbar ist und dort im Spalt 3 zwischen den beiden Bauteilen 1 und 2 festgeklemmt ist.

Der erste Dichtschenkel und der zweite Dichtschenkel 101, 102 weisen jeweils Bereiche auf, in denen sie relativ zu den Nutmaßen im noch nicht in die Nut eingesetzten Zustand ein Übermaß O1, O2, O3 aufweisen, so dass die Dichtung 100 im Spalt 3 gut sitzt und so dass der Spalt 3 im Bereich der Nut 10 gut abgedichtet wird und Bereiche, in welche sie auch im in die Nut 10 eingesetzten Zustand zu der benachbarten/angrenzenden Innenwand der Nut 10 einen Abstand aufweisen. Der Begriff "Übermaß" bedeutet, dass die Breite der Dichtung 100 in dem entsprechenden Bereich mit Übermaß im nicht eingesetzten Zustand um das Übermaß größer ist als die entsprechende Breite der Nut bzw. der korrespondierende Abstand gegenüberliegender Nutwandungen der Nut in diesem Bereich.

Derart werden in vorteilhafter Weise einerseits mehrere definierte Dichtlinien realisiert, an denen die Dichtung 100 an den Innenwänden der Nut 10 anliegt und andererseits wird auf einfache Weise ein fester Sitz der Dichtung 100 in der Nut 10 verwirklicht. Dies bedeutet, dass der erste Dichtschenkel 101 im nicht montierten Zustand nur abschnittsweise größer (breiter: Übermaß 03 senkrecht zum ersten Nutschenkel 11, größer als die Breite B1; höher: Übermaß O2 parallel zum ersten Dichtschenkel, größer als das Maß S2) ist als der erste Nutschenkel 11. Vorzugsweise ist ferner der zweite Dichtschenkel 102 im nicht montierten Zustand nur abschnittsweise größer (Übermaß O1 im Vergleich zum Maß S3) ist als S3 und vorzugsweise genauso breit oder sogar besonders bevorzugt kürzer (mehr als 1 mm Untermaß im Vergleich zum Maß B2) ist als die Breite B2 des zweiten Nutschenkels 12. Gerade die letztgenannte Maßnahme führt zu einer guten Abdichtung im Nutschenkel 12 und zu einem ebenen Abschluss zu den Flächen 8 und 9 am Raum 4.

Der erste Dichtschenkel 101 bildet vorzugsweise in seinem Bereich, mit dem er in den unteren Abschnitt des Nutschenkels 11 eingreift, der in Fig. 1 - 2 und 4 jeweils unterhalb des Nutschenkels 12 liegt, den Dichtfuß 103 aus, mit dem die Dichtung in der Nut 10 positioniert und sicher im Spalt 3 gehalten wird. Auch der Dichtfuß 103 ist daher mit dem Übermaßen O2, O3 in den Nutschenkel 11 eingesetzt. Der erste Dichtschenkel 101, insbesondere der Dichtfuß 103, weist jeweils an einer, zwei oder besonders vorteilhaft an drei seinen drei Außenflächen 103a, b, c zu den Innenwänden des ersten Nutschenkels 11 der Nut 10 hin jeweils eine Einschnürung nach Art einer sich senkrecht zur Bildebene bzw. zum Querschnitt erstreckenden Nut oder Rinne 104, 105, 106 auf.

Diese Rinnen 104, 105, 106 (man vergleiche Fig. 1 und 3) sind derart bemessen, dass auch in dem Zustand, in welchem der Dichtfuß 103 in den Nutschenkel 101 eingesetzt ist, jeweils im Bereich der Rinne 104, 105, 106 jeweils noch ein Abstand, vorzugsweise ein Abstand > 0,1 mm zwischen der Dichtung 100 bzw. deren Dichtfuß 103 und der jeweils zugeordneten Innenwand der Nut 10 besteht. Die Dichtrinne 104 erstreckt sich im eingesetzten Zustand bis zu einem Eckbereich zwischen den beiden Nutschenkel 11, 12. Sie ist vorzugsweise im Querschnitt eher rund.

Die weitere untere Dichtrinne 105 liegt etwa mittig oberhalb des Nutgrundes des Nutschenkels 11. Auch sie ist vorzugsweise im Querschnitt eher rund. Die dritte Dichtrinne 106 ist eher eckig ausgebildet. All dies trägt zu einem guten Sitz der Dichtung 100 und zu einer guten Dichtwirkung optional bei. Außerdem bieten die Rinnen Raum für die erforderliche Verformung der Dichtung beim Einsetzen in die Nut 10.

Der erste Dichtschenkel 101 weist - siehe Fig. 4 - in einem Zustand, in dem er noch nicht in den ersten Längsschenkel der Nut 10 eingesetzt ist, ein Übermaß 03 senkrecht zu dem ersten Längsschenkel 11 der Nut 10 und parallel zu der Ebene der Nut 10 auf (also im Bereich des Dichtfußes 103). Dies führt beim Einsetzen zu einer Komprimierung.

Vorzugsweise sind eine oder mehrere Eckkanten des Dichtfußes 103 angeschrägt bzw. nach Art einer Fase 107, 108 ausgebildet. Diese Fasen 107, 108 sind so bemessen, dass sie die entsprechende innere Eckkante der Nut 10 im in die Nut 10 eingesetzten Zustand nicht berühren. Dies bedeutet ferner auch, dass der Bereich des Übermaßes 03 des Dichtfußes vorzugsweise so weit oberhalb des Nutgrunds 11a des Längsschenkels ausgebildet und vorgesehen ist, und dass das Übermaß 03 so bemessen ist, dass entsprechende Rinnen auch im eingesetzten Zustand im Bereich der Ecken der Nut 10 am Nutfuß verbleiben. Zudem ist der Bereich des Übermaßes O3 des Dichtfußes vorzugsweise so weit unterhalb des Nutgrunds 12a des Querschenkels 12 der Nut 10 ausgebildet und vorgesehen und das Übermaß O3 ist so bemessen, dass auch eine Rinne 104 im Eckbereich zwischen den Längsschenkel 11 und 12 verbleibt.

Vorzugsweise sind eine oder mehrere Eckkanten des Dichtfußes 103 angeschrägt bzw. nach Art einer Fase 107, 108 ausgebildet. Diese Fasen 107, 108 sind so bemessen, dass sie die entsprechende innere Eckkante der Nut 10 im in die Nut 10 eingesetzten Zustand nicht berühren, so dass auch in diesen Eckbereichen kleine Rinnen 113, 114 ausgebildet sind bzw. werden, die aber vorzugweise zur Gewährleistung einer guten Dichtwirkung einen deutlich (um mehr als 50%) kleineren Querschnitt aufweisen als die Rinnen 104, 105, 106.

Am Nutschenkel 11 ist im Übergang zum Spalt 3 eine abgeschrägte Kante 15 ausgebildet, die am Spalt 3 eine Art Hinterschnitt 16 ausbildet. In diesen Hinterschnitt erstreckt sich im eingesetzten Zustand der Dichtung 100 in die Nut ein Wulst 115 der Dichtung, der sich erst infolge des Komprimierens der Dichtung beim Einsetzen in die Nut bzw. beim Verschließen der Nut 10 mit dem Bauteil 1 aus dem Bereich mit dem Übermaß O2 bildet.

Oberhalb des Dichtfußes 103 ist ein Dichtbereich 110 mit einer Dichtfläche 109a, b an den Dichtschenkeln 101, 102 ausgebildet. Der Dichtbereich 110 wird beim Einsetzen in den Spalt 3 komprimiert. Die Dichtfläche 109a, b liegt im eingebauten Zustand an der Grenzfläche 5 des ersten Bauteils 1 gegenüber der Nut 10 an und dichtet derart den Spalt 3 gut ab. Zum Rand 7 des Spaltes 3 bzw. Raum 4 hin weist der Dichtbereich 110 im Bereich des Dichtschenkels 102 eine Randfläche 111 auf. Diese Randfläche 111 ist vorzugsweise derart ausgelegt, dass ein im Wesentlichen ebener, passender sowie glatter Übergang zwischen den Flächen der Bauteile 1, 2, die sich winklig, hier senkrecht, zur Spaltebene 3 erstrecken, und der Randfläche 111 entsteht. Durch das Pressen der Dichtfläche 109b wird aufgrund des vorhandenen Übermaßes O1 in diesem Bereich die Randfläche 111 des Dichtschenkels 102 derart in Richtung Raum 4 gedrückt, dass sich eine mit den Flächen 8 und 9 bündige Randfläche 111 ergibt, ohne dass sich Schmutzecken oder Spalte ausbilden. Diese Randfläche 111 erfüllt die Anforderung an Reinigbarkeit, Sterilisation oder Desinfizierung. Dies ist nicht möglich, wenn ein Vorsprung, insbesondere ein relativ hoher Vorsprung, in dem Nutschenkel 12 ausgebildet ist, wie dies (anders als hier) bei dem eingangs genannten Stand der Technik der Fall ist.

Derart kann ebenfalls sehr gut ein Anbacken von Verunreinigungen verhindert werden.

Optional weist die Dichtung 100 auch in der Dichtfläche 109a, b am Spalt 3 eine weitere Rinne 112 auf, die senkrecht zum Querschnitt (der Fig.3) verläuft. Diese weitere Rinne 112 ist wiederum derart bemessen, dass auch in dem Zustand, in welchem die Dichtung 100 in die Nut 10 an dem Spalt 3 eingesetzt ist und der Dichtfuß 103 in den Nutschenkel 11 eingesetzt und eingeklemmt ist, im Bereich der Rinne 112 ein Abstand zwischen der Dichtung 100 und der Grenzfläche 5 des anderen Bauteils 1 besteht. Hier durch teilt sich die Dichtfläche 109a, b auf zwei Dichtbereiche auf.

Die Dichtung 100 kann als Strangprofil ausgebildet werden, das auf Rollen aufwickelbar ist, so dass von dem Dichtungsprofil Abschnitte mit einer gewünschten Länge abgelängt werden können. Die Dichtung 100 kann aber auch als umfangsgeschlossener Ringprofil (Dichtring) ausgelegt sein.

**Bezugszeichen**

| | |
|---|---|
| Bauteile | 1, 2 |
| Spalt | 3 |
| Raum | 4 |
| Grenzflächen | 5, 6 |
| Randflächen | 7 |
| Flächen | 8, 9 |
| Nut | 10 |
| Nutschenkel | 11, 12 |
| Nutgrund | 11a, 12a |
| Fasen | 13, 14 |
| Kante | 15 |
| Hinterschnitt | 16 |
| Dichtung | 100 |
| erster Dichtschenkel | 101 |
| zweiter Dichtschenkel | 102 |
| Fußbereich | 103 |
| Außenflächen | 103a, b, c |
| Rinnen | 104, 105, 106 |
| Fasen | 107, 108 |
| Dichtfläche | 109a, b |
| Dichtbereich | 110 |
| Randfläche | 111 |
| Rinnen | 112, 113, 114 |
| Wulst | 115 |
| Spalttiefe | S1 |
| Nutschenkeltiefen | S2, S3 |
| Nutschenkelbreite | B1, B2 |
| Übermaß | O1, O2, O3 |

## Patentansprüche

1. Dichtungsanordnung für eine verfahrenstechnische Vorrichtung oder Anlage, mit
a. einer Bauteilanordnung mit zwei abschnittsweise im Bereich eines Spaltes (3) aneinandergrenzenden Bauteilen (1, 2), wobei an dem einen der beiden Bauteile zum Spalt (3) hin eine Nut (10) ausgebildet ist, die L-förmig ausgebildet ist und zu einem Rand (7) des Spaltes (3) hin offen steht, wobei sich ein erster Nutschenkel (11) der Nut (10) senkrecht zur Ebene des Spaltes (3) erstreckt und wobei ein weiterer Nutschenkel (12) senkrecht zum ersten Nutschenkel (11) ausgerichtet ist, der zum Raum (4) hin offen ausgebildet ist,
b. wobei eine Dichtung (100) in die Nut (10) eingesetzt ist, die ebenfalls eine L-Form aufweist, welche der L-Form der Nut (10) entspricht, wozu sie einen ersten Dichtschenkel (101) aufweist und einen dazu senkrechten zweiten Dichtschenkel (102),
c. wobei der erste Dichtschenkel (101) derart ausgelegt ist, dass er in den ersten Nutschenkel (11) eingesetzt ist, und der zweite Dichtschenkel (102) derart ausgelegt ist, dass er in den zweiten Nutschenkel (12) einsetzbar ist und dort festgeklemmt ist,
d. wobei die Dichtung (100) im nicht eingesetzten Zustand relativ zu den Abmessungen der Nut ein Übermaß aufweist und derart in die Nut (10) eingesetzt und in dieser festgeklemmt ist,
**dadurch gekennzeichnet, dass**
e. der erste Dichtschenkel (101) in einem Zustand, in dem er nicht in den ersten Längsschenkel der Nut (10) eingesetzt ist, im Bereich eines Dichtfußes ein Übermaß (O3) zur Nut (10) aufweist,
f. zumindest an drei Außenflächen (103a, b, c) des ersten Dichtschenkels (110) zu den Wandungen der Nut (10) hin im eingesetzten und komprimierten Zustand der Dichtung 100) in die Nut (10) jeweils eine sich senkrecht zum Dichtungsquerschnitt an der jeweiligen Wandung der Nut entlang erstreckende Rinne (104, 105, 106) ausgebildet ist und dass diese eine oder mehrere Rinnen (104, 105, 106) derart bemessen sind, dass auch in dem Zustand, in welchem der Dichtfuß (103) in den Nutschenkel (101) eingesetzt ist, im Bereich der Rinne (104, 105, 106) jeweils noch ein Abstand zwischen der Dichtung (100) und der jeweils zugeordneten Innenwand der Nut (10) besteht, wobei zumindest zwei dieser Rinnen (105, 106) im Bereich des ersten Längsschenkels (11) ausgebildet sind und etwa mittig im Bereich der jeweiligen Nutwandung dieses Längsschenkels (11) verlaufen, und
g. dass oberhalb des Dichtfußes (103) ein Dichtbereich (110) ausgebildet ist, der zum Spaltrand (7) hin eine Randfläche (111) aufweist, wobei die Randfläche (111) derart ausgelegt ist, dass ein im Wesentlichen ebener Übergang zwischen den Randflächen der Bauteile (1, 2), die sich winklig zur Spaltebene (3) erstrecken, und der Randfläche (111) ausgebildet ist.

2. Dichtungsanordnung nach Anspruch 1, **dadurch gekennzeichnet, dass** der Dichtbereich ferner eine Dichtfläche (109a, b) aufweist, die an einer Grenzfläche (5) des ersten Bauteils (1) zum Spalt (3) dichtend anliegt.

3. Dichtungsanordnung nach einem der vorstehenden Ansprüche, **dadurch gekennzeichnet, dass** die Dichtfläche (109a, b) eine Rinne (112) aufweist, die derart bemessen ist, dass auch in dem Zustand, in welchem die Dichtung (100) in den Spalt (3) eingesetzt ist, im Bereich der Rinne (112) ein Abstand zwischen der Dichtung (100) und der Grenzfläche (5) des anderen Bauteils (1) besteht.

4. Dichtungsanordnung nach einem der vorstehenden Ansprüche, **dadurch gekennzeichnet, dass** beidseits jeder der Rinnen (104, 105, 106, 108) eine direkte Anlage der zugehörigen Dichtungsaußenfläche an der zugehörigen Innenwandung des jeweiligen Bauteils (1, 2) gegeben ist.

5. Dichtungsanordnung nach einem der vorstehenden Ansprüche, **dadurch gekennzeichnet, dass** eine oder mehrere Eckkanten des Dichtfußes (103) angeschrägt ausgebildet sind und Fasen (107, 108) ausbilden, wobei diese Fasen (107, 108) so bemessen sind, dass sie eine entsprechende Eckkante der Nut (10) nicht berühren.

6. Dichtungsanordnung nach einem der vorstehenden Ansprüche, **dadurch gekennzeichnet, dass** die Dichtung (100) als Strangprofil ausgebildet ist oder als umfangsgeschlossenes Ringprofil.

7. Dichtungsanordnung nach einem der vorstehenden Ansprüche, **dadurch gekennzeichnet, dass** die Dichtung (100) aus einem Elastomer besteht.

## Claims

1. A seal arrangement for a process device or plant, having
a. a component arrangement with two components (1, 2) that sectionally adjoin one another in the region of a gap (3), wherein a groove (10) is formed on one of the two components in the direction of the gap (3), said groove (10) being formed in an L-shaped manner and being open toward an edge (7) of the gap (3), wherein a first groove limb (11) of the groove (10) extends perpendicularly to the plane of the gap (3), and wherein a further groove limb (12) is oriented perpendicularly to the first groove limb (11), which is formed so as to be open toward the space (4),
b. wherein a seal (100) has been inserted into the groove (10), said seal (100) likewise having an L-shape, corresponding to the L-shape of the groove (10), to which end it has a first sealing limb (101) and a second sealing limb (102) perpendicular thereto,
c. wherein the first sealing limb (101) is designed such that it is inserted into the first groove limb (11), and the second sealing limb (102) is designed such that it is insertable into the second groove limb (12) and clamped tightly there,
d. wherein, in the non-inserted state, the seal (100) has an oversize relative to the dimensions of the groove and is inserted into the groove as such and tightly clamped therein,
**characterized in that**
e. the first sealing limb (101) has, in a state in which it is not inserted into the first longitudinal limb of the groove (10), an oversize (03) with respect to the groove (10) in the region of a sealing foot,
f. in each case one channel (104, 105, 106) extending perpendicularly to the seal cross section along the respective wall of the groove is formed at least on three outer faces (103a, b, c) of the first sealing limb (110) that face the walls of the groove (10) in the inserted and compressed state of the seal (100) in the groove (10), and **in that** these one or more channels (104, 105, 106) are dimensioned such that, even in the state in which the sealing foot (103) has been inserted into the groove limb (101), in the region of the channel (104, 105, 106) a spacing still exists in each case between the seal (100) and the respectively associated inner wall of the groove (10), wherein at least two of these channels (105, 106) are formed in the region of the first longitudinal limb (11) and extend approximately centrally in the region of the respective groove wall of this longitudinal limb (11), and
g. **in that**, above the sealing foot (103), a sealing region (110) is formed which has a peripheral face (111) facing the gap edge (7), wherein the peripheral face (111) is designed such that a substantially planar transition is formed between the peripheral faces of the components (1, 2), which extend at an angle to the gap plane (3), and the peripheral face (111).

2. The seal arrangement as claimed in claim 1, **characterized in that** the sealing region also has a sealing face (109a, b), which bears in a sealing manner against a boundary face (5) of the first component (1) with the gap (3).

3. The seal arrangement as claimed in one of the preceding claims, **characterized in that** the sealing face (109a, b) has a channel (112), which is dimensioned such that, even in the state in which the seal (100) has been inserted into the gap (3), a spacing between the seal (100) and the boundary face (5) of the other component (1) exists in the region of the channel (112).

4. The seal arrangement as claimed in one of the preceding claims, **characterized in that**, on both sides of each of the channels (104, 105, 106, 108), there is direct abutment of the associated seal outer face against the associated inner wall of the respective component (1, 2).

5. The seal arrangement as claimed in one of the preceding claims, **characterized in that** one or more corner edges of the sealing foot (103) are formed in a beveled manner and form chamfers (107, 108), wherein these chamfers (107, 108) are dimensioned such that they do not touch a corresponding corner edge of the groove (10).

6. The seal arrangement as claimed in one of the preceding claims, **characterized in that** the seal (100) is configured as an extruded profile or as a circumferentially closed ring profile.

7. The seal arrangement as claimed in one of the preceding claims, **characterized in that** the seal (100) consists of an elastomer.

## Revendications

1. Agencement d'étanchéité pour un dispositif ou une installation d'ingénierie des procédés, comportant
a. un agencement de composants comprenant deux composants (1, 2) contigus sur certaines parties au niveau d'une fente (3), une rainure (10) étant formée sur l'un des deux composants vers la fente (3), laquelle rainure est réalisée en forme de L et est ouverte vers un bord (7) de la fente (3), une première branche de rainure (11) de la rainure (10) s'étendant perpendiculairement au plan de la fente (3) et une autre branche de rainure (12) étant orientée perpendiculairement à la première branche de rainure (11) et ouverte vers l'espace (4),
b. dans lequel un joint (100) est inséré dans la rainure (10), lequel présente également une forme en L qui correspond à la forme en L de la rainure (10), auquel effet il présente une première branche de joint (101) et une seconde branche de joint (102) perpendiculaire à celle-ci,
c. dans lequel la première branche de joint (101) est conçue pour être insérée dans la première branche de rainure (11) et la seconde branche de joint (102) est conçue pour être insérée dans la seconde branche de rainure (12) et y être serrée,
d. dans lequel le joint (100) présente, dans l'état non inséré, une surdimension par rapport aux dimensions de la rainure et est ainsi inséré dans la rainure (10) et serrée dans celle-ci,
**caractérisé en ce que**
e. la première branche de joint (101) présente, dans un état dans lequel elle n'est pas insérée dans la première branche longitudinale de la rainure (10), une surdimension (O3) par rapport à la rainure (10) dans la zone d'un pied de joint,
f. dans l'état inséré et comprimé du joint (100) dans la rainure (10), une cannelure respective (104, 105, 106) s'étendant perpendiculairement à la section transversale du joint le long de la paroi respective de la rainure est formée au moins sur trois surfaces extérieures (103a, b, c) de la première branche de joint (110) vers les parois de la rainure (10), et que cette ou ces cannelures (104, 105, 106) sont dimensionnées de telle sorte que, même dans l'état dans lequel le pied de joint (103) est inséré dans la branche de rainure (101), il existe encore dans la zone de la cannelure respective (104, 105, 106) une distance entre le joint (100) et la paroi intérieure associée de la rainure (10), au moins deux de ces cannelures (105, 106) étant formées dans la zone de la première branche longitudinale (11) et s'étendant à peu près au centre dans la zone de la paroi de rainure respective de cette branche longitudinale (11), et
g. qu'une zone d'étanchéité (110) est formée au-dessus du pied de joint (103), laquelle présente une surface de bord (111) vers le bord de fente (7), la surface de bord (111) étant conçue de telle sorte qu'une transition sensiblement plane soit formée entre les surfaces de bord des composants (1, 2), qui s'étendent selon un angle avec le plan de fente (3), et la surface de bord (111).

2. Agencement d'étanchéité selon la revendication 1, **caractérisé en ce que** la zone d'étanchéité présente en outre une surface d'étanchéité (109a, b) qui s'applique de manière étanche contre une surface limite (5) du premier composant (1) vers la fente (3).

3. Agencement d'étanchéité selon l'une des revendications précédentes, **caractérisé en ce que** la surface d'étanchéité (109a, b) présente une cannelure (112) qui est dimensionnée de telle sorte que, même dans l'état dans lequel le joint (100) est inséré dans la fente (3), il existe dans la zone de la cannelure (112) une distance entre le joint (100) et la surface limite (5) de l'autre composant (1).

4. Agencement d'étanchéité selon l'une des revendications précédentes, **caractérisé en ce que** des deux côtés de chacune des cannelures (104, 105, 106, 108), il existe un contact direct entre la surface extérieure d'étanchéité associée et la paroi intérieure associée du composant respectif (1, 2).

5. Agencement d'étanchéité selon l'une des revendications précédentes, **caractérisé en ce qu'**un ou plusieurs bords d'angle du pied de joint (103) sont biseautés et forment des chanfreins (107, 108), ces chanfreins (107, 108) étant dimensionnés de telle sorte qu'ils ne touchent pas un bord d'angle correspondant de la rainure (10).

6. Agencement d'étanchéité selon l'une des revendications précédentes, **caractérisé en ce que** le joint (100) est réalisé sous la forme d'un profilé extrudé ou d'un profilé annulaire fermé circonférentiellement.

7. Agencement d'étanchéité selon l'une des revendications précédentes, **caractérisé en ce que** le joint (100) est constitué d'un élastomère.
